# EUROPEAN PATENT SPECIFICATION

(11) **EP 4 366 920 B1**
(45) Date of publication and mention of the grant of the patent: **30.07.2025**
(21) Application number: 22746980.6
(22) Date of filing: 06.07.2022
(51) Int. Cl.: B27D 1/00, B31B 50/60, B65D 3/12, B65D 8/00, B27D 1/08

(54) **CONTAINER AND METHOD ASSEMBLING A CONTAINER**
BEHÄLTER UND VERFAHREN ZUR MONTAGE EINES BEHÄLTERS
RÉCIPIENT ET PROCÉDÉ D'ASSEMBLAGE D'UN RÉCIPIENT

(30) Priority: 09.07.2021 CH 0700372021
(43) Date of publication of application: 15.05.2024
(73) Proprietor: Arboloom IP AG, 2503 Biel (CH)
(72) Inventor: TORRIANI, Laurent, 2516 Lamboing (CH); BERNHARD, Philipp, 3600 Thun (CH)
(74) Representative: Frei Patent Attorneys
(86) International application number: PCT/EP2022/068665
(87) International publication number: WO 2023/280895

(56) References cited:
- WO-A2-2012/174422
- US-A- 3 164 314
- US-A- 312 381

## Description

The invention relates to the field of containers for packaging, in particular for food and beverages. It relates to a container, a method for its assembly and a corresponding assembly device.

Disposable containers, in particular for food and beverages are ubiquitous. Whereas mounds of containers discarded in ancient times, such as the Roman Monte Testaccio, provide historical insights, modern one-way containers have an environmental impact that calls for mitigation. Existing approaches focus on the complete product life cycle, taking into account both production and disposal. It is known to manufacture disposable containers, in particular for food, from materials such as bamboo, wood, straw, etc. There is a need for containers that have a smaller environmental impact with regard to existing approaches.

US 3'164'314 discloses a paper cup bottom glued to the cup's side walls. A bottom disk is placed near the lower end of the side wall, a bonding adhesive is applied to the circumference of the bottom disk, and the lower end of the side wall is curled or folded over the region comprising the adhesive.

FR 2 819 495 discloses a method for creating the wall for a cheese box from a sheet of veneer combined with a sheet of pliable material.

WO 2010/043817 shows a cup made of veneer, with a wall part made of veneer coated with a flexible layer, and a bottom part made of plastic-coated cardboard. The wall and bottom part are welded together. It is doubtful whether the weld is sufficiently strong and/or liquid-tight.

It is therefore a possible object of the invention to create a container and a method for assembling a container of the type mentioned initially, and a related assembly device, which overcome the disadvantages mentioned above.

Another possible object of the invention is to provide a container with a low environmental footprint.

Another possible object of the invention is to provide an alternative method for manufacturing a container.

These objects are achieved by a container and a method for assembling a container and an assembly device according to the corresponding independent claims.

The method is for assembling a container, the container comprising
- a side wall, the side wall comprising a cellulose-based material, in particular veneer, and the side wall being bent to have a tubular shape,
- at least one bottom part, the bottom part comprising a cellulose-based material, in particular veneer;
- a connecting element, the connecting element being made of a fusible material;

The method comprises the steps of
- arranging the connecting element and the bottom part at one end of the tubular shape in the side wall;
- imparting energy to the connecting element, thereby softening the connecting element;
- compressing the connecting element and in particular also the bottom part in a direction substantially normal to a plane in which the bottom part extends, thereby expanding the softened connecting element in the plane in which the bottom part extends;
- thereby bonding the connecting element to the side wall and to the bottom part.

Bonding the connecting element to the side wall and to the bottom part joins the two and creates a seal between them. In this way, it is possible to simply and reliably create a container made mainly of veneer.

It is understood that a shape being tubular can comprise the shape being cylindrical, in the shape of a general cylinder, that is, a non-circular cylinder. In the most general sense, the container thus is not limited to a cylindrical or conical side wall with a circular base, and not to a circular bottom part. For example, a top and/or bottom base of the cylinder can have the shape of a rounded triangle, rounded square or rectangle, rounded pentangle, or generally of a rounded polygon, or of an oval, or an ellipse or the like. Furthermore, a shape being tubular can mean that the shape corresponds to the surface of a truncated cone or prism, the latter typically having rounded edges. The shape being tubular can comprise a combination of cylindrical and conical sections (each at different locations along the tube's height).

Prior to assembly, the tubular shape of the side wall comprises a top opening and a bottom opening, and these openings are distanced from one another along a **longitudinal axis** of the tubular shape. Typically, the shapes of these openings correspond to the top and bottom bases of a cylinder and/or cone corresponding to the tubular shape. The tubular shape can have rotational symmetry, in which case a corresponding axis of symmetry coincides with the longitudinal axis.

The direction substantially normal to the plane in which the bottom part extends, typically is parallel to the longitudinal axis of the tubular shape. This direction typically also is parallel to a direction of relative movement of the anvil and plunger when compressing the connecting element and bottom part.

In embodiments, the thickness of the cellulose-based material, in particular the veneer of the side wall is between 0.2 millimetres and one millimetre, in particular between 0.4 millimetres and 0.8 millimetres, more in particular between 0.5 millimetres and 0.7 millimetres. In embodiments, the thickness of the cellulose-based material, in particular the veneer used in each of one or more layers of the bottom part is between 0.2 millimetres and one millimetre, in particular between 0.4 millimetres and 0.8 millimetres, more in particular between 0.5 millimetres and 0.7 millimetres.

In embodiments, the veneer is be made of maple wood or birch wood or poplar wood or beech wood.

In embodiments, the cellulose-based material, in particular the veneer of the side wall and/or of the bottom part constitutes a least 70%, in particular at least 80%, even more in particular 90% of the weight of the respective side wall or bottom part, or of a disc that is part of the bottom part.

The cellulose-based material gives the side wall and/or bottom part its structural stability. The cellulose-based material typically is veneer, but in other embodiments is paper or cardboard or the like. Other materials that are part of the side wall and/or bottom part can be present to provide liquid-tightness, improve bonding to the connecting element, provide a basis for a label, etc. These other materials can be in the form of a film or thin layer, as described below.

In embodiments, the bottom part is a single piece of material, in particular wherein the bottom part is thicker than the side wall, and/or thicker than one millimetre or two millimetres.

In embodiments, the bottom part is made of at least two separate parts, in particular a first disc and a second disc,
with the connecting element arranged in-between them, and
*optionally* an intermediate layer also arranged in-between them,
*in particular* with the intermediate layer bonding the two parts together.

In embodiments, when the two separate parts are present, they can have congruent shapes, which if they are circular means that they have the same diameter, or the inner of the two bottom parts can be smaller than the outer one. Furthermore, each of the two separate parts can have the same thickness as that of the side wall.

In embodiments, the bottom part is shaped to prevent a flow of the connecting element, as it is compressed, inwards in the radial direction. This can be done by the bottom part being shaped to have a notch or channel running around the circumference of the bottom part, and arranging the connecting element in this channel. The channel can be established by the bottom part having a first disc and a second disc, and the intermediate layer arranged between these discs having a smaller diameter than these discs. In embodiments, the second disc is a ring. In this case, the second disc can be arranged at the outside of the bottom part, that is, at the outside of the resulting container.

In embodiments, the method comprises the step of creating a pre-assembled bottom part by bonding elements of the bottom part prior to arranging the connecting element and the bottom part in the side wall,
in particular by bonding a first disc and second disc with the connecting element arranged between them,
in particular by bonding the first disc and second disc an optionally the intermediate layer to one another in a central region of the bottom part.

In embodiments, when compressing the connecting element and bottom part, a gap is present between an outer edge of the bottom part, and the expanding connecting element covers the outer edge of the bottom part.

The connecting element flowing over and covering the outer edge prevents, when the container is in use, liquid from entering the bottom part via the channels running along the grain of the wood that would otherwise be exposed at the outer edge. This could compromise the stability of the bottom part and/or cause chemicals from the wood to leak into the liquid.

Such a gap around an outer edge can be present around a single bottom part, where only a single bottom part is present. When two bottom parts are present, the gap can be present around one or both of them. In embodiments, the side wall is conical and the two bottom parts are congruent, so the gap is present around an inner one of the two bottom parts. In embodiments, the side wall is straight and the inner one of the two bottom parts is smaller than an outer one. The inner one is the one facing the inside of the container. For the reasons given above, it is preferable at least the inner one whose outer edge is covered by the expanded connecting element.

In embodiments, at least one bottom part is bent at its periphery, *in particular* by the at least one bottom part being forced into an opening at one end of the side wall in its tubular shape.

In this way, the outer edge can be oriented towards the connecting element, facilitating the covering of the outer edge. Alternatively, or in addition, the bottom part is pre-bent prior to inserting it in the side wall in its tubular shape.

In embodiments, two bottom parts are present, and only one or both of them are bent at their periphery.

In embodiments, the connecting element is a ring of solid material, or a section of a ring of solid material.

The connecting element can be
- stamped or cut from a sheet material; or
- moulded; or
- made of a filament or strip of material bent to form a ring or a section of a ring; or.
- cut from an extruded tube; or
- extruded on the bottom part.

The connecting element being extruded can mean that the ring is extruded in the form of a single strand deposited on the bottom part, the strand constituting the entire width of the connecting element. Alternatively, the connecting element being extruded can mean that the ring is built up by a 3D-printer from a single strand thinner than the connecting element, in multiple passes.

In embodiments, the connecting element has one of a rectangular, a round, a triangular and a trapezoidal cross section.

In embodiments, the connecting element has a thickness between 0.1 and 1 mm, preferably between 0.3 and 0.6 mm

In embodiments, imparting energy to the connecting element comprises *at least one of*
- heating the connecting element, and
- imparting mechanical energy, *in particular* imparting vibration energy such as ultrasound energy, to the connecting element.

In embodiments, vibration energy such as ultrasound energy is imparted through the plunger, the plunger thus acting as a sonotrode. The plunger can be shaped to focus the ultrasound energy on specific locations of the bottom part and/or the connecting element. In particular, it can focus the energy on the periphery of the bottom part, where the connecting element is to be softened for bonding to the bottom part and side wall.

In embodiments, compressing the connecting element comprises one of
- moving the plunger towards the anvil, with the side wall being stationary relative to the anvil, the position of the side wall being defined by the anvil; and
- moving the anvil, *or optionally* a central part of the anvil, with the side wall being stationary relative to the plunger, the position of the side wall being defined by the plunger and *optionally* by an outer part of the anvil, in which the central part of the anvil moves.

In embodiments, the method comprises the step of, at least when compressing the connecting element,
- a constraining ring supporting the side wall in the radial direction, for countering radial forces of the expanding connecting element.

In embodiments, the method comprises the step of **pre-heating the side wall** in a region in which it is to be bonded to the bottom part, **before** the step of compressing and bonding the connecting element,
*in particular* by one or more of
- a flow of heated air;
- irradiation with infrared radiation;
- heat transfer from a heating element, *in particular* wherein the heating element transmits heat to the side wall through the constraining ring.

Irradiation with infrared radiation can be accomplished with a heated plunger, which can be different from the plunger used to compress the bottom part.

In embodiments, the method comprises the step of **pre-heating the bottom part** in a region in which it is to be bonded to the side wall, **before** the step of compressing and bonding the connecting element. One or more of the heating principles listed above for heating the side wall can be applied to the bottom part as well.

Pre-heating the side wall can improve the bonding of the connecting element to the material coating the side wall. Pre-heating the bottom can reduce the time to heat the connecting element, thereby reducing manufacturing time.

In embodiments, the method comprises the step of **heating** the elements being bonded, **during** the step of compressing and bonding the connecting element, *in particular* by one or more of
- heat transfer from a heating element through the anvil;
- heat transfer from a heating element through the plunger;
- heat transfer from a heating element through the constraining ring.

In embodiments, the side wall is covered, at least in a region in which it is to be bonded to the bottom part, with a film of material that improves the bonding to the connecting element and bottom part, in particular wherein the material is a thermoplastic material and/or the same material as the material of the connecting element.

This will improve the bonding between the connecting element and the side wall covered or coated with the film of material. In embodiments, the film of material is applied by laminating, spraying or painting or printing the material on the side wall. The film of material can comprise a single layer of material or multiple layers of the same material or of different materials. One of the layers can be an adhesive material or glue for bonding the film to the side wall. Suitable materials for the film are, for example, Polyethylene (PE), Low-density polyethylene (LDPE), High-density polyethylene (HDPE), EVA (ethylene-vinyl acetate), PVC (polyvinyl chloride), PVAC (polyvinyl acetate), PVAL (polyvinyl alcohol), PP (polypropylene), or biodegradable materials. Biodegradable materials are, for example, based on Polylactic acid (PLA) or lignin. Specific examples are ecovio^{®} or Mater-Bi^{®}.

In embodiments, an outer edge of the bottom part is coated, preventing liquids from entering the material of the bottom part, in particular channels of the grain of the veneer.

In embodiments, a material for coating the side wall and/or covering the outer edge is a biodegradable polymer material.

In embodiments, the entire container or only a subsection of the container around the bottom part is coated or treated after the bottom part is bonded to the side wall, typically for sealing pores of the material, in particular the veneer and for improving its resistance to liquids. This coating or treatment can comprise applying a layer of varnish or wax or paint.

In embodiments, the anvil and plunger are shaped to leave between them, when they are moved towards one another and compressing the bottom part and connecting element, a larger gap at the periphery than in the middle.

This has the effect of compressing the middle of the bottom part more than its periphery, and of forcing the softened or molten material of the connecting element outwards in the radial direction, against the side wall.

In embodiments, the anvil and plunger have corresponding respective convex and concave shapes, forcing the bottom part to have a corresponding shape after bonding to the side wall. Such a shape, typically an arched shape, is mechanically more stable than a flat shape.

In embodiments, the plunger has a diameter that is smaller than the diameter of the bottom part or the second disc and/or the first disc. This also forces the bottom part or respective disc to have an arched shape after bonding to the side wall. This also helps to stabilise the shape of the bottom when the container is filled with a hot liquid.

In embodiments, the anvil is shaped to conform to the shape of a gap created when overlapping layers of the side wall.

This prevents an uneven distribution of the flow of the connecting element into the gap, which would happen due to a variation of the width of the gap where the layers of the side wall overlap. It also maintains, at this location, an internal pressure on the connecting element forcing it in the radial direction against the pores of the side wall. In embodiments, the connecting element is shaped to conform to the shape of the gap created when overlapping layers of the side wall.

The container can be manufactured as described herein, the container comprising
- a side wall, the side wall comprising a cellulose-based material and the side wall being bent to have a tubular shape,
- at least one bottom part, the bottom part comprising a cellulose-based material;
- a connecting element, the connecting element being made of a fusible material;
wherein the connecting element has a ring-like shape and is bonded to the side wall and the bottom part.

The **assembly device** configured for manufacturing a container according to the method of claim 1 comprising
- an anvil shaped according to an inner shape of a side wall of the container to be manufactured:
- a plunger, the plunger being configured to be moved towards the anvil and to compress an object arranged between the plunger and the anvil, and optionally to impart ultrasonic energy to that object; means for imparting energy to a connecting element made of a fusible material, for softening the connecting element;
- optionally a heating element arranged to heat a side wall of the container to be manufactured.

In embodiments, the anvil is configured, in addition to the plunger or instead of the plunger, to impart ultrasonic energy to the object being compressed.

Further embodiments are evident from the dependent patent claims.

The subject matter of the invention will be explained in more detail in the following text with reference to exemplary embodiments which are illustrated in the attached drawings, which schematically show:
- Figure 1: an assembled container;
- Figure 2: an assembly device in which a container is assembled;
- Figure 3-4: an assembly process for a container with a bottom part with two layers;
- Figure 5-6: an assembly process for a container with a bottom part with two layers and an intermediate layer;
- Figure 7-8: an assembly process for a container with a bottom part shaped to form a containing space for a connecting element;
- Figure 9: an anvil and plunger with curved leading surfaces;
- Figure 10: various heating elements in an assembly device;
- Figure 11-13: cross sections of containers with different types of wall seams;
- Figure 14: an anvil adapted to a side wall with overlapping edges at the seam;
- Figure 15: connecting elements with different cross sections;
- Figure 16: an anvil with a resiliently supported leading protrusion;
- Figure 17: a section of a container with a curved or arched bottom part;
- Figure 18: a pre-assembled bottom part.

In principle, identical parts are provided with the same reference symbols in the figures.

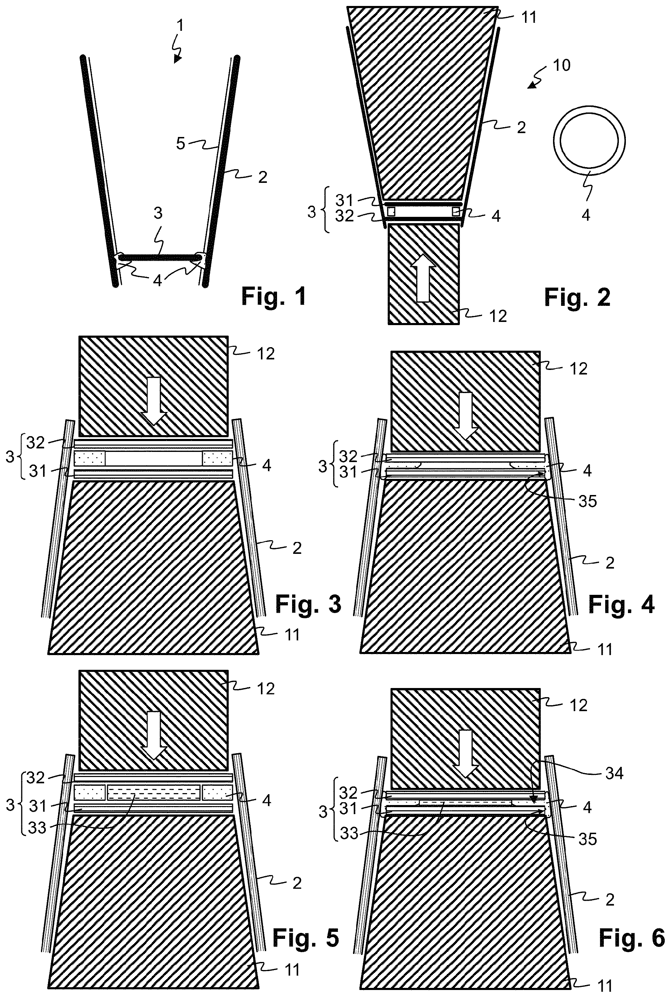

**Figure 1** shows a sectional view of an assembled container 1, comprising a side wall 2 and a bottom part 3 bonded to one another by a connecting element 4. The connecting element 4, shown in a side view and also in a separate view from above. has a ring-like shape, following a circumference of the bottom part 3 where it is near the side wall 2. The connecting element 4 is made of a fusible material that has been softened and in the soft state has been deformed to bond to the side wall 2 and the bottom part 3 around this circumference. The fusible material can be a thermoplastic material, such as a plastic material. It can be the same material than a material coating the side wall, or a different one. In embodiments, the material is one of EVA (ethylene-vinyl acetate), PVC (polyvinyl chloride), PVAC (polyvinyl acetate), PVAL (polyvinyl alcohol), PP (polypropylene), PEHD (polyethylene high-density), PELD (polyethylene low-density). In embodiments, it is be a wax, wax-based or similar material.

The side wall 2 is shown to be covered with a film layer 5. For the sake of the representation, the film layer 5 is shown to be separated from the side wall 2, in reality there is of course no gap between them, the film layer 5 being, for example, sprayed or painted on the side wall 2 or bonded to the side wall 2. The film layer 5 can help to bond the connecting element 4 to the side wall 2. In embodiments, the film layer 5 is not present. For the remaining figures, it is understood that they relate both to embodiments with and without the film layer 5.

While the container 1 is shown to have the shape of a truncated cone, in particular a truncated circular cone, in other embodiments the base of the container 1 can have a shape other than a circle, all of the following examples being adapted to this shape. Also, the container 1 have a cylindrical shape, that is, with the side wall forming a hollow cylinder.

The thickness of the veneer used for the side wall 2 and bottom part 3 can be between 0.2 millimetres and one millimetre. The thickness of the bottom part 3, which can comprise a single disc of relatively thick veneer or can comprise two discs of veneer, can be the same as that of the side wall 2. Alternatively, it can be higher, for example more than one or more than two millimetres. In this case, each of the two discs of veneer can have the same thickness as that of the side wall.

In other embodiments, the side wall 2 and/or bottom part 3 are made of another cellulose-based material than veneer, for example paper or cardboard.

**Figure 2** shows an assembly device 10 in which a container 1 is assembled. The assembly device 10 comprises an anvil 11 whose outer shape corresponds to the inner shape of the container 1. A plunger 12 is arranged to be moved towards the anvil 11, or vice versa. The plunger 12 can comprise or be attached to a generator of ultrasound vibrations, and thus transmit these vibrations to an object compressed by the plunger 12.

For assembling a container 1, the assembly device 10 is typically used in an inverted position as opposed to the position in the Figure 1, as in the following figures, that is, with the anvil 11 below and the plunger 12 pushing down towards the anvil 11.

In **a setup phase,** a side wall 2 is placed on the part of the anvil 11 corresponding to the shape of the inside of the 2, with the bottom part 3 arranged on leading surface of the anvil leading surface 11. The bottom part 3 comprises at least one disc of veneer, or first disc 31, and the connecting element 4. Typically, the first disc 31 faces the anvil 11 and the connecting element 4 faces the plunger 12. Optionally, a second disc 32 can be present between the connecting element 4 and the plunger 12. For the sake of representation, here and in other figures the various elements are shown with gaps between them, whereas in reality they touch one another.

In a **compression phase,** the plunger 12 is moved towards the anvil 11, or vice versa, compressing the bottom part 3 and forcing the material of the connecting element 4 against the side wall 2. The plunger 12 can impart vibration energy, such as ultrasound vibration energy, to the bottom part 3 and connecting element 4, to heat and thereby soften the connecting element 4. The movement of the plunger 12 is in a direction essentially normal to a plane in which the bottom part 3 extends. The movement of material of the connecting element 4 is essentially in radial and outward directions that are parallel to this plane.

The plane in which the bottom part 3 extends typically is normal to a longitudinal axis of the container 1, which can also be an axis of symmetry of the container 1 and an axis along which a height of the container 1 is measured.

In embodiments, the material of the connecting element 4 is also forced to cover an outer edge 35 of one or both of the discs of the bottom part 3.

**Figure 3-4** show the assembly process for a container 1 with a bottom part 3 with two layers 31, 32. **Figure 3** shows the beginning of the compression phase. Between a first disc 31 and second disc 32 of the bottom part 3, the ring-shaped connecting element 4 is arranged. The side wall 2 lies on and is held by the anvil 11. The second disc 32 can touch the side wall 2, whereas there can be a gap between the first disc 31 and the side wall 2. **Figure 4** shows the end of the compression phase, with the material of the connecting element 4 having been forced against the side wall 2 and further into the gap between the first disc 31 and the side wall 2, covering the outer edge 35 of the first disc 31.

**Figure 5-6** show an assembly process for a container 1 with a bottom part 3 with two layers or discs 31, 32 and an intermediate layer 33, at the beginning and the end of the compression phase, respectively. The intermediate layer 33 is compressible in the vertical direction, in particular more compressible than the two discs, and is arranged in the otherwise hollow space in the ring-shaped connecting element 4. It forms an inner boundary to a containing space 34 containing the connecting element 4 and prevents the material of the connecting element 4 from flowing inward in a radial direction, where it is of less use than at the periphery. In embodiments, not illustrated, the intermediate layer 33 and the two discs 31, 32 are all compressed to a certain degree, forcing the material of the connecting element 4 to flow outward.

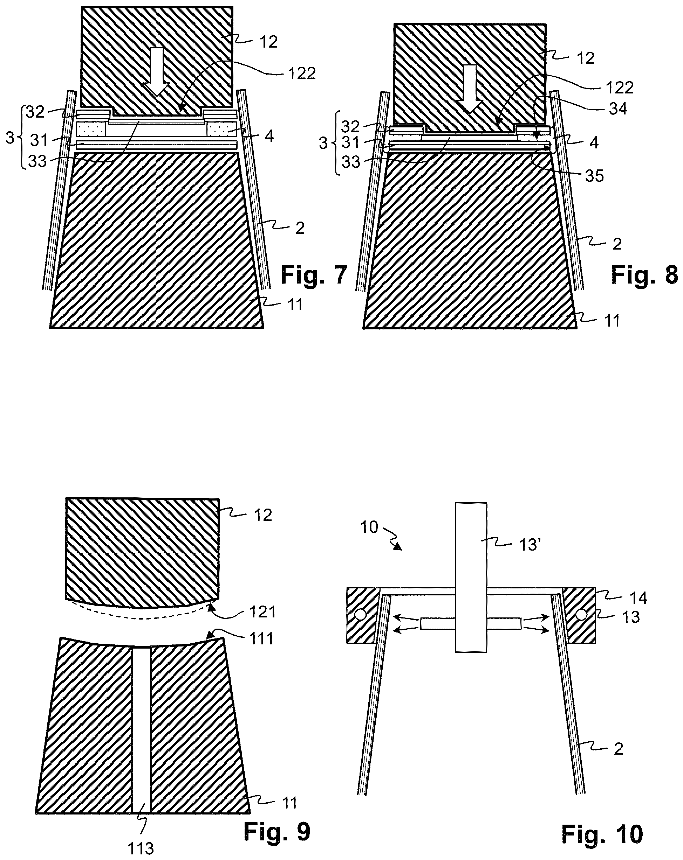

**Figure 7-8** show the assembly process for a container 1 with a bottom part 3 shaped to form a containing space 34 for the connecting element 4, at the beginning and the end of the compression phase, respectively. The second disc 32 is only a ring instead of a full disc, and the intermediate layer 33 is a smaller disc that fits inside the second disc 32 or is slightly larger than the inside diameter of the ring, as shown in **Figure 7****.** The plunger 12 comprises a central, leading protrusion 122 corresponding to the shape of the second disc 32, so that the plunger 12 presses against both the second disc 32 and the intermediate layer 33. As shown in **Figure 8****,** in the compressed phase the intermediate layer 33 is essentially pushed against the first disc 31, forming an inner boundary to a containing space 34 for the connecting element 4.

In embodiments, not illustrated, the second disc 32 and intermediate layer 33 face the inside of the container 1 and the anvil 11 instead of the plunger 12. In this case the anvil 11 (instead of the plunger 12) comprises a leading protrusion 112 corresponding to the shape of the second disc 32.

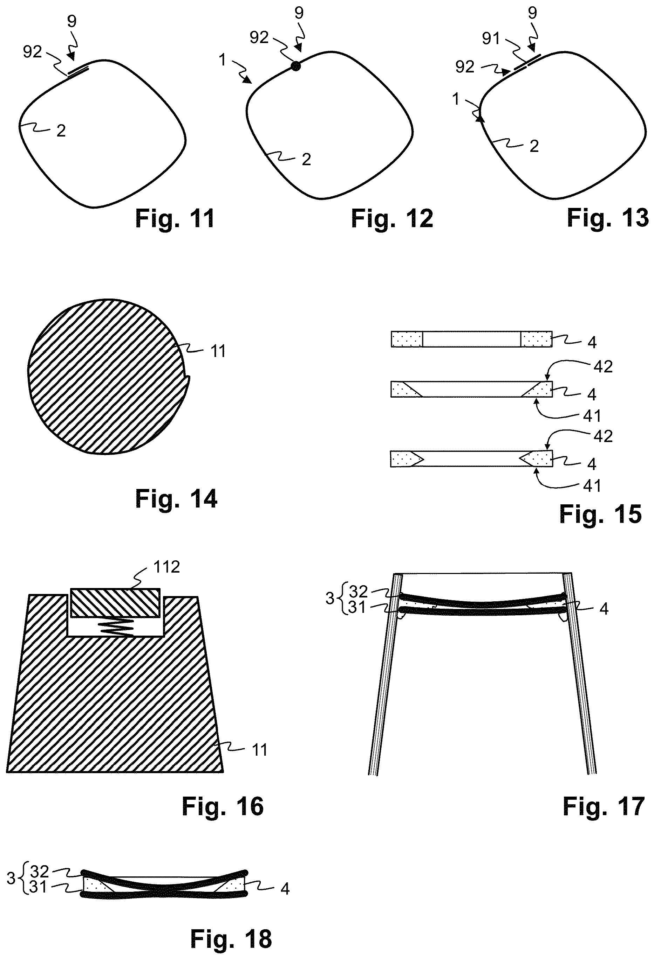

**Figure 16** shows an anvil 11 with such a leading protrusion 112. The leading protrusion can be shaped as part of the anvil 11, or, as shown, be resiliently supported in the anvil 11, so that it can yield as the bottom part 3 is compressed. In embodiments, the leading protrusion 122 of the plunger 12 shown in **Figures 7-8** is resiliently supported so that it can yield as the bottom part 3 is compressed.

In embodiments, not illustrated, the intermediate layer 33 is not present, and the leading protrusion protrudes so far that in the compressed state it lies at least in part against the first disc 31, forming an inner boundary to a containing space 34 for the connecting element 4.

The leading protrusion can be tapered or rounded, rather than flat as in **Figures 7-8****,** so that it forces material from the connecting element 4 outward in radial directions. A plunger 12 with such a protrusion, here called plunger leading surface 121, is shown in the top part of **Figure 9****.** In combination with an anvil 11 with a flat leading surface, the effect described will occur.

**Figure 9** also shows an anvil 11 with a curved anvil leading surface 111. In combination with the correspondingly shaped plunger leading surface 121, a curved bottom part 3 can be compressed or created by compressing a flat bottom part 3. In embodiments, the plunger leading surface 121 has the shape shown by a dashed line, leaving a smaller gap between the plunger 12 and anvil 11 in the middle than at the periphery. This has the effect of forcing material of the connecting element 4 outward in the compression phase.

Such a curved anvil 11 and plunger 12 can create or be used with a bottom part 3 that is bent at least at its periphery. This can be combined with the bottom part 3 being forced into the opening at the end of the side wall 2 to which it is to be bonded, creating a radial pre-tension force between the bottom part 3 and side wall 2. Typically, the curved bottom part 3 will have its convex side facing the inside of the container 1.

**Figure 17** shows a section of a container with a curved or arched bottom part bottom part 3. The curve or arch can be created by correspondingly shaped anvil 11 and/or plunger 12, as shown in the embodiments of **Figures 7, 8** and **9****.** Alternatively, it can be created when creating a pre-assembled bottom part 3 by bonding the first disc 31 and second disc 32 in a central region of the discs, with the connecting element 4 arranged between them in its not yet deformed state. As shown, the compression of the first disc 31 and second disc 32 can cause them to touch or be closer to one another in the middle, and be distanced from one another at the periphery. In embodiments, not illustrated, only the first disc 31 or only the second disc 32 is present.

**Figure 18** shows such a pre-assembled bottom part 3.

**Figure 9** also shows a suction duct 113. It can be connected to a pump to create a suction force when a bottom part 3 is placed against the anvil leading surface 111, holding the bottom part 3 in place prior to and during assembly. Alternatively, such a suction duct is arranged in the plunger 12, for holding the bottom part 3 against the plunger 12, allowing the plunger 12, for example, to pick up the bottom part 3 from a feeder, holding it and placing it on the anvil 11. Such a suction duct can be combined with the anvil 11 or plunger 12 of any of the other embodiments.

**Figure 10** shows a constraining ring 14 and various heating elements 13, 13' in an assembly device. The constraining ring 14 is arranged at an outer periphery of the side wall 2, in a section in which it is bonded to the bottom part 3. It holds and stabilises the side wall 2 against radial forces from the connecting element 4 being pushed against the side wall 2 in the compression phase.

None, one or more of the heating elements 13, 13' can be present. A first heating element 13 can be arranged as part of the constraining ring 14, heating the side wall 2 from the outside. A second heating element 13' can be arranged to heat the side wall 2 from the inside. This can be by heated air and/or by infrared radiation. Infrared radiation can be generated by a heated object. The purpose and effect of the heating in each case is to heat the inner surface of the side wall 2 prior to the compression phase. The inner surface, as explained earlier, can be treated to comprise the film layer 5, and in other embodiments can be untreated. The inner surface being heated facilitates bonding of the material of the connecting element 4 to the inner surface.

**Figure 11-13** show cross sections of containers with different types of wall seams 9 of the side wall 2. By way of example, the cross sections are not circular, and it is understood that the types of wall seams 9 can be present for any shape of cross section. A wall seam 9 is where the veneer, rolled to have a tubular shape, is joined to itself. **Figure 11** shows a wall seam 9 made by overlapping one end of the rolled veneer over the other end. A seam adhesive 92 is present between the layers of the veneer in the region of overlap. **Figure 12** shows a wall seam 9 made by having the edges of the rolled veneer facing one another without overlap and being joined by the seam adhesive 92. **Figure 11** also shows edges of the rolled veneer facing one another, and a seam element 91 covering the seam and overlapping the two ends of the veneer, holding them together, with the seam adhesive 92 between the seam element 91 and the respective end.

**Figure 14** shows a cross section of an anvil 11 adapted to a side wall with overlapping edges at the seam, as in **Figure 11****.** The side wall 2 is assumed to have a circular cross section. So does the anvil 11, but with a small step in diameter, corresponding to the inner shape of the side wall 2 where the edges overlap. When assembling the container 1, the side wall 2 is placed on the anvil 11 oriented such that the step in the anvil 11 lies under the step in the side wall 2. This has the effect of closing a gap between the anvil 11 and side wall 2 which would otherwise be present and which would cause an irregularity in the flow of the material of the connecting element 4 flowing outward, and weaken the bond or the tightness of the seal created by the connecting element 4 at this location.

**Figure 15** shows connecting elements 4 with different cross sections. In one embodiment, the cross section of the ring is rectangular. In another one, it is triangular or trapezoidal. As a result, the surface of the ring on a first side 41 is larger than on an opposite, second side 42.

The effect of this is that the first (larger) side 41 can be arranged to face the first disc 31, and the second (smaller) side 42 to face the second disc 32, or the plunger 12 if no second disc 32 is used. With the plunger 12 acting as an ultrasound sonotrode, and imparting vibration energy mainly at the smaller second side 42 the material of the connecting element 4 in an inner region of the ring near the first side 41 is softened less than in other, outer regions, and the material of the connecting element 4 will predominantly flow in an outward direction.

In another embodiment, the surface on both sides 41, 42 is the same, but in between them, the material extends more towards the ring's centre than near the two surfaces. Here too, the material in the region extended towards the centre is softened less and impedes the flow in the inward direction.

Regardless of the exact shape, a connecting element 4 can be manufactured by stamping or cutting it from sheet of flat material, by moulding the ring, or by extrusion moulding a strip of material and then cutting of a section of the strip and forming the ring from this section. Or the connecting element 4 can be manufactured by extruding or otherwise manufacturing a tube, and cutting rings constituting connecting elements 4 off the tube. Or the connecting element 4 can be manufactured by extruding the material of the connecting element 4 onto the bottom part 3 or a part of the bottom part 3, such as the first disc 31 or second disc 32, or in a gap between a pre-assembled first disc 31 and second disc 32. In each case, the respective ring can be closed, forming a complete ring, or open, forming a section of a ring.

For all embodiments it can be the case that the elements of the bottom part 3 are pre-assembled before being joined to the side wall 2. Such a pre-assembly thus can comprise at least a first disc 31 and a connecting element 4. The connecting element 4 can be manufactured in any of the ways described in the preceding paragraph. In other embodiments, it can comprise, in addition, a second disc 32 and further also an intermediate layer 33.

Generally, as shown in the embodiments so far, it is the case that during assembly the first disc 31 faces the anvil 11 and the connecting element 4 is arranged on the side of the first disc 31 **facing away from** the anvil 11. The plunger 12 compresses the connecting element 4 directly without a second disc 32 being present, or via a second disc 32.

In embodiments, not illustrated, the first disc 31 faces the anvil 11 and the connecting element 4 is arranged on the side of the first disc 31 **facing** the anvil 11. That is, the connecting element 4 lies between the first disc 31 and the anvil 11. The anvil 11 can compress the connecting element 4 directly, without a second disc 32 being present, or via a second disc 32 arranged between the connecting element 4 and the anvil 11.

In embodiments, the veneer is made of hardwood.

In embodiments, the veneer is made of wood from coniferous trees, in particular of pine trees, in particular spruce trees. For thin veneer, hardwood is preferable to coniferous woods. For food-contact applications, non-coniferous tree may be preferred. This is because resin present in wood of coniferous trees may disperse into substances such as beverages or foods. In embodiments, locally grown tree species or native species are preferred to reduce environmental impact of the production. In Switzerland, such species are, for example, birch or beech or maple.

With regard to a differentiation between hardwood and softwood, there exist two general types of woody trees:
- Gymnosperms (seed plants not flowering), being coniferous (females bearing ovulate cones that release unenclosed seeds at maturity), usually evergreen (gradually shedding foliage, green foliage throughout year), known as softwoods (nonporous, wood typically lighter & softer), with needle-like or scale-like leaves. Examples are: firs, spruces, pines.
- Angiosperms (flowering seed plants), being fruit-bearing (enclosing seeds within), usually deciduous (seasonally shedding all foliage, no foliage for part of year), known as hardwoods (wood structure porous & more complex, wood generally harder), with broad leaves. Examples are: hickories, maples, oaks.

While the invention has been described in present embodiments, it is distinctly understood that the invention is not limited thereto, but may be otherwise variously embodied and practised within the scope of the claims.

## Claims

1. A method for assembling a container (1), the container (1) comprising
• a side wall (2), the side wall (2) comprising a cellulose-based material, in particular veneer, and the side wall (2) being bent to have a tubular shape,
• at least one bottom part (3), the bottom part (3) comprising a cellulose-based material, in particular veneer;
• a connecting element (4), the connecting element (4) being made of a fusible material;
the method comprising the steps of
• arranging the connecting element (4) and the bottom part (3) at one end of the tubular shape in the side wall (2);
• imparting energy to the connecting element (4), thereby softening the connecting element (4);
• compressing the connecting element (4) and in particular also the bottom part (3) in a direction substantially normal to a plane in which the bottom part (3) extends, thereby expanding the softened connecting element (4) in the plane in which the bottom part (3) extends;
• thereby bonding the connecting element (4) to the side wall (2) and to the bottom part (3).

2. The method of claim 1, wherein the bottom part (3) is made of at least two separate parts, in particular a first disc (31) and a second disc (32),
with the connecting element (4) arranged in-between them, and
*optionally* an intermediate layer (33) also arranged in-between them,
*in particular* with the intermediate layer (33) bonding the two parts together.

3. The method of claim 2, comprising the step of creating a pre-assembled bottom part (3) by bonding elements of the bottom part (3) prior to arranging the connecting element (4) and the bottom part (3) in the side wall (2),
in particular by bonding a first disc (31) and second disc (32) with the connecting element (4) arranged between them,
in particular by bonding the first disc (31) and second disc (32) an optionally the intermediate layer (33) to one another in a central region of the bottom part (3).

4. The method of one of the preceding claims, wherein when compressing the connecting element (4) and bottom part (3), a gap is present between an outer edge (35) of the bottom part (3), and the expanding connecting element (4) covers the outer edge (35) of the bottom part (3).

5. The method of one of the preceding claims, wherein the connecting element (4) is a ring of solid material, the ring being
• stamped or cut from a sheet material; or
• moulded; or
• made of a filament or strip of material bent to form the ring; or.
• cut from an extruded tube; or
• extruded on the bottom part (3).

6. The method of claim 5, wherein the connecting element (4) has one of a rectangular, a round, a triangular and a trapezoidal cross section.

7. The method of one of the preceding claims, wherein imparting energy to the connecting element (4) comprises *at least one of*
• heating the connecting element (4), and
• imparting mechanical energy, *in particular* imparting vibration energy such as ultrasound energy, to the connecting element (4).

8. The method of one of the preceding claims, comprising the step of, at least when compressing the connecting element (4),
• a constraining ring (14) supporting the side wall (2) in the radial direction, for countering radial forces of the expanding connecting element (4).

9. The method of one of the preceding claims, comprising the step of **pre-heating the side wall** (2) in a region in which it is to be bonded to the bottom part (3), **before** the step of compressing and bonding the connecting element (4),
*in particular* by one or more of
• a flow of heated air;
• irradiation with infrared radiation;
• heat transfer from a heating element (13), *in particular* wherein the heating element (13) transmits heat to the side wall (2) through the constraining ring.

10. The method of one of the preceding claims, comprising the step of **heating** the elements being bonded, **during** the step of compressing and bonding the connecting element (4), *in particular* by one or more of
• heat transfer from a heating element (13) through the anvil (11);
• heat transfer from a heating element (13) through the plunger (12);
• heat transfer from a heating element (13) through the constraining ring (14).

11. The method of one of the preceding claims, wherein the side wall (2) is covered, at least in a region in which it is to be bonded to the bottom part (3), with a film of material that improves the bonding to the connecting element (4) and bottom part (3), in particular wherein the material is a thermoplastic material and/or the same material as the material of the connecting element.

12. The method of one of the preceding claims, wherein an outer edge (35) of the bottom part (3) is coated, preventing liquids from entering the material of the bottom part (3), in particular channels of the grain of the veneer.

13. The method of one of the preceding claims, wherein the anvil (11) and plunger (12) are shaped to leave between them, when they are moved towards one another and compressing the bottom part (3) and connecting element (4), a larger gap at the periphery than in the middle.

14. A container (1), manufactured according to one of the preceding claims, the container (1) comprising
• a side wall (2), the side wall (2) comprising a cellulose-based material and the side wall (2) being bent to have a tubular shape,
• at least one bottom part (3), the bottom part (3) comprising a cellulose-based material;
• a connecting element (4), the connecting element (4) being made of a fusible material;
wherein the connecting element (4) has a ring-like shape and is bonded to the side wall (2) and the bottom part (3).

15. An **assembly device** (10) configured for manufacturing a container (1) according to the method of one of claims 1 to 13, the assembly device (10) comprising
• an anvil (11) shaped according to an inner shape of a side wall (2) of the container (1) to be manufactured:
• a plunger (12), the plunger (12) being configured to be moved towards the anvil (11) and to compress an object arranged between the plunger (12) and the anvil (11), and optionally to impart ultrasonic energy to that object;
• means for imparting energy to a connecting element (4) made of a fusible material, for softening the connecting element (4);
• optionally a heating element (13) arranged to heat a side wall (2) of the container (1) to be manufactured.

## Patentansprüche

1. Verfahren zum Zusammenbau eines Behälters (1), wobei der Behälter (1) umfasst
• eine Seitenwand (2), wobei die Seitenwand (2) ein Material auf Zellulosebasis, insbesondere Furnier, umfasst und die Seitenwand (2) zu einer röhrenförmigen Gestalt gebogen ist,
• mindestens einen Bodenteil (3), wobei der Bodenteil (3) ein Material auf Zellulosebasis, insbesondere Furnier, umfasst;
• ein Verbindungselement (4), wobei das Verbindungselement (4) aus einem schmelzbaren Material besteht;
wobei das Verfahren die folgenden Schritte umfasst:
• Anordnen des Verbindungselements (4) und des Bodenteils (3) an einem Ende der röhrenförmigen Form in der Seitenwand (2);
• Zuführen von Energie zu dem Verbindungselement (4), wodurch das Verbindungselement (4) erweicht wird;
• Zusammendrücken des Verbindungselements (4) und insbesondere auch des Bodenteils (3) in einer Richtung im Wesentlichen senkrecht zu einer Ebene, in der sich der Bodenteil (3) erstreckt, wodurch das erweichte Verbindungselement (4) in der Ebene, in der sich der Bodenteil (3) erstreckt, expandiert wird;
• dadurch Verbinden des Verbindungselements (4) mit der Seitenwand (2) und mit dem Bodenteil (3).

2. Das Verfahren nach Anspruch 1, wobei der Bodenteil (3) aus mindestens zwei getrennten Teilen besteht, insbesondere aus einer ersten Scheibe (31) und einer zweiten Scheibe (32), mit dem Verbindungselement (4) dazwischen angeordnet, und optional einer ebenfalls dazwischen angeordneten Zwischenschicht (33), insbesondere wobei die Zwischenschicht (33) die beiden Teile miteinander verbindet.

3. Verfahren nach Anspruch 2, umfassend den Schritt des Erzeugens eines vormontierten Bodenteils (3) durch Verbinden von Elementen des Bodenteils (3) vor dem Anordnen des Verbindungselements (4) und des Bodenteils (3) in der Seitenwand (2),
insbesondere durch Verbinden einer ersten Scheibe (31) und einer zweiten Scheibe (32) mit dem dazwischen angeordneten Verbindungselement (4),
insbesondere durch Verbinden der ersten Scheibe (31) und der zweiten Scheibe (32) und optional der Zwischenschicht (33) miteinander in einem mittleren Bereich des Bodenteils (3).

4. Das Verfahren nach einem der vorstehenden Ansprüche, wobei beim Zusammendrücken des Verbindungselements (4) und des Bodenteils (3) ein Spalt zwischen einer Aussenkante (35) des Bodenteils (3) vorhanden ist und das sich ausdehnende Verbindungselement (4) die Aussenkante (35) des Bodenteils (3) bedeckt.

5. Das Verfahren nach einem der vorstehenden Ansprüche, wobei das Verbindungselement (4) ein Ring aus festem Material ist, wobei der Ring
• aus einem flächigen Material gestanzt oder geschnitten ist; oder
• geformt ist; oder
• aus einem Filament oder Materialstreifen hergestellt ist, der zu dem Ring gebogen ist; oder
• aus einem extrudierten Rohr geschnitten ist; oder
• auf den Bodenteil (3) extrudiert ist.

6. Das Verfahren nach Anspruch 5, wobei das Verbindungselement (4) einen rechteckigen, runden, dreieckigen oder trapezförmigen Querschnitt aufweist.

7. Das Verfahren nach einem der vorstehenden Ansprüche, wobei das Zuführen von Energie zu dem Verbindungselement (4) mindestens eines umfasst von
• Erwärmen des Verbindungselements (4), und
• Zuführen von mechanischer Energie, insbesondere Zuführen von Schwingungsenergie wie Ultraschallenergie, zu dem Verbindungselement (4).

8. Das Verfahren nach einem der vorstehenden Ansprüche, umfassend den Schritt, zumindest beim Zusammendrücken des Verbindungselements (4),
• Vorsehen eines die Seitenwand (2) in radialer Richtung abstützenden Begrenzungsrings (14) zum Entlasten radialer Kräfte des sich ausdehnenden Verbindungselements (4).

9. Das Verfahren nach einem der vorstehenden Ansprüche, umfassend den Schritt des Vorwärmens der Seitenwand (2) in einem Bereich, in dem sie mit dem Bodenteil (3) verbunden werden soll, vor dem Schritt des Zusammendrückens und Verbindens des Verbindungselements (4),
insbesondere durch eines oder mehrere der folgenden Mittel
• einen Strom erwärmter Luft;
• Bestrahlung mit Infrarotstrahlung;
• Wärmeübergang von einem Heizelement (13), insbesondere wobei das Heizelement (13) Wärme durch den Begrenzungsring auf die Seitenwand (2) überträgt.

10. Das Verfahren nach einem der vorstehenden Ansprüche, umfassend den Schritt des Erwärmens der zu verbindenden Elemente während des Schritts des Zusammendrückens und Verbindens des Verbindungselements (4), insbesondere durch eines oder mehrere der folgenden Mittel
• Wärmeübertragung von einem Heizelement (13) durch die Matrize (11);
• Wärmeübertragung von einem Heizelement (13) durch den Stempel (12);
• Wärmeübertragung von einem Heizelement (13) durch den Begrenzungsring (14).

11. Das Verfahren nach einem der vorstehenden Ansprüche, wobei die Seitenwand (2) zumindest in einem Bereich, in dem sie mit dem Bodenteil (3) verbunden werden soll, mit einer Folie aus einem Material bedeckt ist, das die Verbindung mit dem Verbindungselement (4) und dem Bodenteil (3) verbessert, insbesondere wobei das Material ein thermoplastisches Material und/oder dasselbe Material wie das Material des Verbindungselements ist.

12. Das Verfahren nach einem der vorstehenden Ansprüche, wobei eine Aussenkante (35) des Bodenteils (3) beschichtet ist, um zu verhindern, dass Flüssigkeiten in das Material des Bodenteils (3), insbesondere in die Maserungskanäle des Furniers, eindringen können.

13. Das Verfahren nach einem der vorstehenden Ansprüche, wobei die Matrize (11) und der Stempel (12) so geformt sind, dass sie, wenn sie aufeinander zu bewegt werden und den Bodenteil (3) und das Verbindungselement (4) zusammendrücken, zwischen sich einen grösseren Spalt an der Peripherie als in der Mitte lassen.

14. Ein Behälter (1), hergestellt nach einem der vorstehenden Ansprüche, wobei der Behälter (1) umfasst
• eine Seitenwand (2), wobei die Seitenwand (2) ein Material auf Zellulosebasis umfasst und die Seitenwand (2) zu einer röhrenförmigen Form gebogen ist,
• mindestens einen Bodenteil (3), wobei der Bodenteil (3) ein Material auf Zellulosebasis umfasst;
• ein Verbindungselement (4), wobei das Verbindungselement (4) aus einem schmelzbaren Material besteht;
wobei das Verbindungselement (4) eine ringförmige form aufweist und mit der Seitenwand (2) und dem Bodenteil (3) verbunden ist.

15. Eine Montagevorrichtung (10) zur Herstellung eines Behälters (1) gemäss einem Verfahren nach den Ansprüchen 1 bis 13, wobei die Montagevorrichtung (01) umfasst
• eine Matrize (11), die entsprechend einer Innenform einer Seitenwand (2) des herzustellenden Behälters (1) geformt ist;
• einen Stempel (12), wobei der Stempel (12) so konfiguriert ist, dass er in Richtung der Matrize (11) bewegbar ist und einen zwischen dem Stempel (12) und der Matrize (11) angeordneten Gegenstand zusammendrücken kann und optional diesem Gegenstand Ultraschallenergie zuführen kann;
• Mittel zum Zuführen von Energie zu einem Verbindungselement (4) aus einem schmelzbaren Material, um das Verbindungselement (4) zu erweichen;
• Optional ein Heizelement (13), das zum Erwärmen einer Seitenwand (2) des herzustellenden Behälters (1) angeordnet ist.

## Revendications

1. Méthode d'assemblage d'un conteneur (1), le conteneur (1) comprenant
• une paroi latérale (2), la paroi latérale (2) comprenant un matériau à base de cellulose, en particulier un placage, et la paroi latérale (2) étant pliée pour avoir une forme tubulaire,
• au moins une partie inférieure (3), la partie inférieure (3) comprenant un matériau à base de cellulose, en particulier un placage;
• un élément de connexion (4), l'élément de connexion (4) étant constitué d'un matériau fusible;
La méthode comprend les étapes suivantes
• en disposant l'élément de connexion (4) et la partie inférieure (3) à une extrémité de la forme tubulaire dans la paroi latérale (2);
• transmettre de l'énergie à l'élément de connexion (4), ce qui a pour effet d'assouplir l'élément de connexion (4);
• comprimer l'élément de connexion (4) et en particulier la partie inférieure (3) dans une direction sensiblement normale à un plan dans lequel s'étend la partie inférieure (3), ce qui a pour effet de dilater l'élément de connexion ramolli (4) dans le plan dans lequel s'étend la partie inférieure (3);
• coller ainsi l'élément de connexion (4) à la paroi latérale (2) et à la partie inférieure (3).

2. Procédé de la revendication 1, dans lequel la partie inférieure (3) est constituée d'au moins deux parties distinctes, en particulier un premier disque (31) et un second disque (32),
avec l'élément de connexion (4) disposé entre eux, et
éventuellement une couche intermédiaire (33) disposée entre les deux,
en particulier avec la couche intermédiaire (33) qui relie les deux parties.

3. Le procédé de la revendication 2, comprenant l'étape de création d'une partie inférieure pré-assemblée (3) en collant des éléments de la partie inférieure (3) avant de disposer l'élément de connexion (4) et la partie inférieure (3) dans la paroi latérale (2),
en particulier en collant un premier disque (31) et un second disque (32) avec l'élément de connexion (4) disposé entre eux,
en particulier en collant le premier disque (31) et le second disque (32) et éventuellement la couche intermédiaire (33) l'un à l'autre dans une région centrale de la partie inférieure (3).

4. Le procédé de l'une des revendications précédentes, dans lequel, lors de la compression de l'élément de connexion (4) et de la partie inférieure (3), un espace est présent entre un bord extérieur (35) de la partie inférieure (3), et l'élément de connexion en expansion (4) recouvre le bord extérieur (35) de la partie inférieure (3).

5. Procédé de l'une des revendications précédentes, dans lequel l'élément de connexion (4) est un anneau en matériau solide, l'anneau étant
• estampés ou découpés dans une feuille de matériau; ou
• moulé; ou
• constitué d'un filament ou d'une bande de matériau plié pour former l'anneau; ou
• découpé dans un tube extrude; ou
• extrudé sur la partie inférieure (3).

6. Procédé de la revendication 5, dans lequel l'élément de connexion (4) a une section rectangulaire, ronde, triangulaire ou trapézoïdale.

7. Procédé de l'une des revendications précédentes, dans lequel l'apport d'énergie à l'élément de connexion (4) comprend au moins l'un des éléments suivants
• chauffer l'élément de connexion (4), et
• transmettre une énergie mécanique, en particulier une énergie vibratoire telle qu'une énergie ultrasonore, à l'élément de connexion (4).

8. Le procédé de l'une des revendications précédentes, comprenant l'étape consistant, au moins, à comprimer l'élément de connexion (4),
• un anneau de contrainte (14) supportant la paroi latérale (2) dans la direction radiale, pour contrer les forces radiales de l'élément de connexion en expansion (4).

9. Procédé de l'une des revendications précédentes, comprenant l'étape de préchauffage de la paroi latérale (2) dans une zone où elle doit être collée à la partie inférieure (3), avant l'étape de compression et de collage de l'élément de connexion (4),
notamment par un ou plusieurs des éléments suivants
• un flux d'air chauffé;
• irradiation par rayonnement infrarouge;
• transfert de chaleur à partir d'un élément chauffant (13), en particulier dans le cas où l'élément chauffant (13) transmet la chaleur à la paroi latérale (2) à travers l'anneau de contrainte.

10. Procédé de l'une des revendications précédentes, comprenant l'étape de chauffage des éléments à coller, lors de l'étape de compression et de collage de l'élément de connexion (4), notamment par un ou plusieurs des moyens suivants
• le transfert de chaleur d'un élément chauffant (13) à travers la matrice (11);
• transfert de chaleur d'un élément chauffant (13) à travers le plongeur (12);
• le transfert de chaleur d'un élément chauffant (13) à travers l'anneau de contrainte (14).

11. Procédé de l'une des revendications précédentes, dans lequel la paroi latérale (2) est recouverte, au moins dans une zone où elle doit être collée à la partie inférieure (3), d'un film de matériau qui améliore la liaison avec l'élément de connexion (4) et la partie inférieure (3), en particulier dans lequel le matériau est un matériau thermoplastique et/ou le même matériau que le matériau de l'élément de connexion.

12. Procédé de l'une des revendications précédentes, dans lequel un bord extérieur (35) de la partie inférieure (3) est revêtu, empêchant les liquides de pénétrer dans le matériau de la partie inférieure (3), en particulier dans les canaux du grain du placage.

13. Procédé de l'une des revendications précédentes, dans lequel la matrice (11) et le plongeur (12) sont conformés de manière à laisser entre eux, lorsqu'ils sont déplacés l'un vers l'autre et compriment la partie inférieure (3) et l'élément de connexion (4), un espace plus grand à la périphérie qu'au milieu.

14. Récipient (1), fabriqué selon l'une des revendications précédentes, le récipient (1) comprenant
• une paroi latérale (2), la paroi latérale (2) comprenant un matériau à base de cellulose et la paroi latérale (2) étant pliée pour avoir une forme tubulaire,
• au moins une partie inférieure (3), la partie inférieure (3) comprenant un matériau à base de cellulose;
• un élément de connexion (4), l'élément de connexion (4) étant constitué d'un matériau fusible;
dans lequel l'élément de connexion (4) a une forme d'anneau et est lié à la paroi latérale (2) et à la partie inférieure (3).

15. Dispositif d'assemblage (10) configuré pour la fabrication d'un récipient (1) selon le procédé de l'une des revendications 1 à 13, le dispositif d'assemblage (10) comprenant
• une matrice (11) façonnée selon la forme intérieure d'une paroi latérale (2) du récipient (1) à fabriquer:
• un plongeur (12), le plongeur (12) étant configuré pour être déplacé vers la matrice (11) et pour comprimer un objet placé entre le plongeur (12) et la matrice (11), et éventuellement pour transmettre une énergie ultrasonique à cet objet;
• des moyens pour communiquer de l'énergie à un élément de connexion (4) fait d'un matériau fusible, pour ramollir l'élément de connexion (4);
• éventuellement un élément chauffant (13) conçu pour chauffer une paroi latérale (2) du récipient (1) à fabriquer.
